(19) Europäisches Patentamt / European Patent Office / Office européen des brevets

(11) **EP 2 492 599 B1**

(12) **EUROPÄISCHE PATENTSCHRIFT**

(45) Veröffentlichungstag und Bekanntmachung des Hinweises auf die Patenterteilung:
**06.07.2016 Patentblatt 2016/27**

(51) Int Cl.:
**F24D 3/18** *(2006.01)*  **F24D 19/10** *(2006.01)*
**F24F 5/00** *(2006.01)*  **F25B 30/02** *(2006.01)*
**F24D 3/08** *(2006.01)*

(21) Anmeldenummer: **12000981.6**

(22) Anmeldetag: **15.02.2012**

(54) **Heizanlage mit Biomassefeuerung und Wärmepumpe**

Heating assembly with biomass furnace and heat pump

Installation de chauffage dotée d'une combustion de biomasse et d'une pompe à chaleur

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.02.2011 DE 102011011936**

(43) Veröffentlichungstag der Anmeldung:
**29.08.2012 Patentblatt 2012/35**

(73) Patentinhaber:
• **Riener, Karl Stefan**
 **4563 Micheldorf (AT)**
• **HET - Heiz- und Energietechnik Entwicklungs GmbH**
 **5201 Seekirchen am Wallersee (AT)**

(72) Erfinder:
• **Riener, Karl Stefan**
 **4563 Micheldorf (AT)**
• **Haas, Günther**
 **4400 Steyr (AT)**
• **Bauer, Thomas**
 **5020 Salzburg (AT)**

(74) Vertreter: **Samson & Partner Patentanwälte mbB**
 **Widenmayerstraße 6**
 **80538 München (DE)**

(56) Entgegenhaltungen:
 **US-A1- 2004 118 933   US-A1- 2009 171 862**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

GEBIET DER ERFINDUNG

Die vorliegende Erfindung bezieht sich allgemein auf eine Wärmeerzeugungsanlage zum Heizen und/oder Kühlen eines Gebäudes, und insbesondere auf eine Wärmeerzeugungsanlage mit einer Biomassefeuerung und einer Wärmepumpe und ein Verfahren zum Steuern einer solchen Wärmeerzeugungsanlage.

HINTERGRUND DER ERFINDUNG

Es sind allgemein Heizungen, bspw. für Gebäude, bekannt, die auf der Verbrennung fester biogener Brennstoffe beruhen. Für Gebäudeheizungen muss bekanntermaßen die Wärmeerzeugung entsprechend den vorherrschenden Außentemperaturen regelbar sein. Bei Heizungen mit automatischer Regelung der Verbrennung biogener fester Brennstoffe ist eine Regelung der Leistung bei bekannten Biomassefeuerungen von 100% bis herunter auf 30% möglich. Benötigt die Heizung am Anfang und gegen Ende einer Heizperiode weniger Wärme als beim Betrieb der Biomassefeuerung mit 30% ihrer Feuerungsleistung erzeugt wird, so wird der Überschuss an Wärme in einem so genannten Lastausgleichsspeicher (auch Pufferspeicher genannt) für die spätere Entnahme zur Nutzung zwischengespeichert.

Allerdings wird die in dem Pufferspeicher gespeicherte Wärme nicht unbedingt benötigt, wenn bspw. die Außentemperaturen hoch genug sind und/oder kein Warmwasser benötigt wird.

Außerdem ist der Wirkungsgrad einer Biomassefeuerung im unteren Leistungsbereich bei bspw. 30% der Maximalleistung nicht unbedingt optimal. Dementsprechend kann es gerade am Anfang und Ende der Heizungsperiode aufgrund des schlechteren Wirkungsgrades zu Energieverschwendung und zu einer schlechteren Verbrennung mit schlechteren Abgaswerten kommen.

Aus der Veröffentlichung US 2004/0118933 A1 ist eine Wärmeerzeugungsanlage mit einer Wärmepumpe und einem Heizofen als Hilfseinrichtung bekannt. Je nach Temperatur in einem Luftstrom stromaufwärts von der Wärmepumpe bzw. je nach Außentemperatur werden die Wärmepumpe und die Hilfseinrichtung gesteuert.

Außerdem ist aus dieser Veröffentlichung bekannt, dass Pelletheizkessel als Heizofen eingesetzt werden können.

Die Veröffentlichung US 2009/0171862 A1 zeigt eine Wärmeerzeugungsanlage mit einer Wärmepumpe und einer Heizeinrichtung, die fossile Brennstoffe verwendet. Ein Umschaltpunkt zwischen Wärmepumpe und der Heizeinrichtung wird u.a. auf Grundlage von Kosten für den fossilen Brennstoffen ermittelt.

Aufgabe der vorliegenden Erfindung ist es eine verbesserte Wärmeerzeugungsanlage, die auf der Verbrennung biogener fester Brennstoffe beruht, und ein zugehöriges Verfahren zur Steuerung einer solchen Wärmeerzeugungsanlage zur Verfügung zu stellen.

KURZFASSUNG DER ERFINDUNG

Nach einem ersten Aspekt stellt die vorliegende Erfindung ein Verfahren zum Steuern einer Wärmeerzeugungsanlage in Übereinstimmung mit Patentanspruch 1 bereit.

Nach einem zweiten Aspekt stellt die vorliegende Erfindung eine Wärmeerzeugungsanlage in Übereinstimmung mit Patentanspruch 6 bereit.

Weitere Aspekte und Merkmale der vorliegenden Erfindung ergeben sich aus den abhängigen Ansprüchen, der beigefügten Zeichnung und der nachfolgenden Beschreibung bevorzugter Ausführungsformen.

KURZBESCHREIBUNG DER ZEICHNUNG

Ausführungsformen der Erfindung werden nun beispielhaft und unter Bezugnahme auf die beigefügte Zeichnung beschreiben, in der:

Fig. 1 eine Wärmeerzeugungsanlage nach dem Stand der Technik veranschaulicht;
Fig. 2 ein Diagramm einer Jahresenergiebedarfsdeckung einer Gebäudeheizung veranschaulicht;
Fig. 3 eine erste Ausführungsform einer Wärmeerzeugungsanlage in Übereinstimmung mit der vorliegenden Erfindung veranschaulicht;
Fig. 4 eine zweite Ausführungsform einer Wärmeerzeugungsanlage, die auch zum Kühlen ausgestaltet, in Übereinstimmung mit der vorliegenden Erfindung veranschaulicht; und
Fig. 5 ein Steuerungsschema der ersten und zweiten Ausführungsform nach Fiog. 3 bzw. Fig. 4 veranschaulicht.

BESCHREIBUNG VON AUSFÜHRUNGSFORMEN

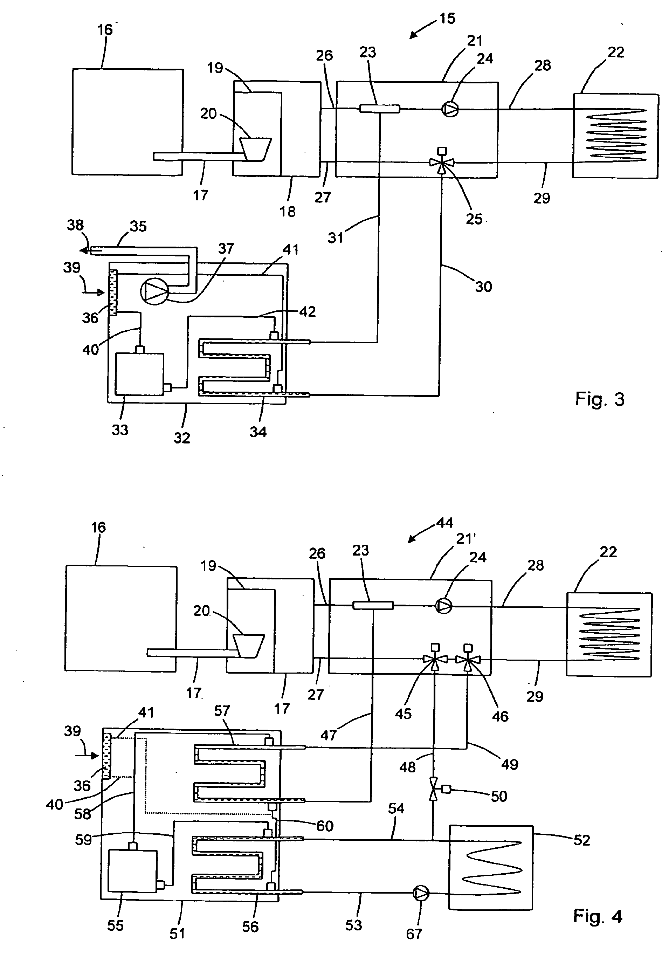

In Fig. 3 ist eine erste Ausführungsform einer Wärmeerzeugungsanlage 15 in Übereinstimmung mit der vorliegenden Erfindung veranschaulicht. Vor einer detaillierten Beschreibung folgen zunächst allgemeine Erläuterungen zu den Ausführungsformen.

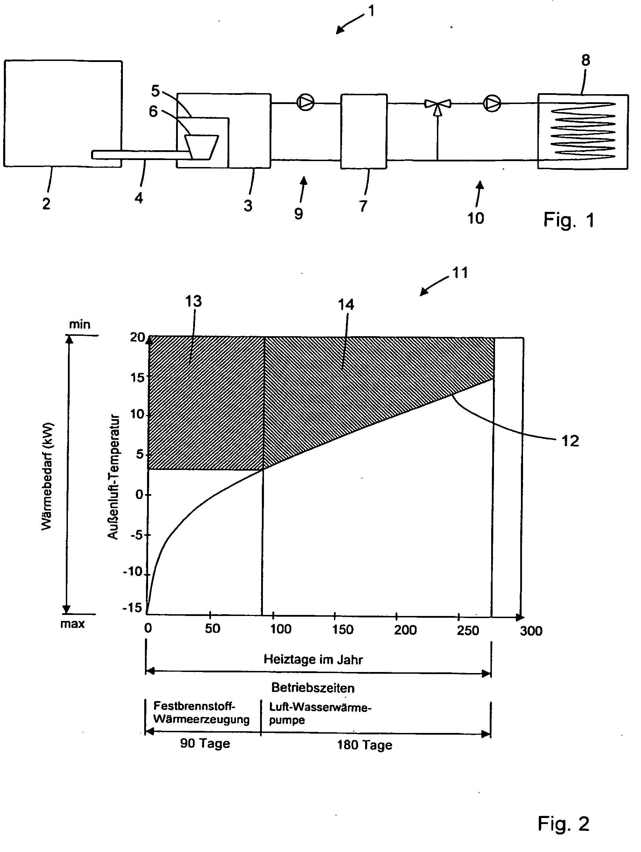

Eine typische, im Stand der Technik bekannte Heizungsanlage 1 zur Warmwasserbereitung, die erneuerbarer Energie in Form von biogenen festen Brennstoffen wie bspw. Pellets (Holzmehl- Holzspanpresslinge) nutzt, ist in Fig. 1 gezeigt.

Die Heizungsanlage 1 weist ein Brennstoffläger 2 für Pellets für die Verbrennung in einer Biomassefeuerung 3 auf. Die Pellets gelangen über ein Förderrohr 4 von dem Brennstofflager 2 in eine Brennschale 6 in einem Feuerungsraum 5 der Biomassefeuerung und werden dort verbrannt.

Die Biomassefeuerung 3 ist wasserführend und die bei der Verbrennung der Pellets erzeugte Wärme wird über einen Heizungswasserkreislauf 9, 10 Raumheizflächen 8 zugeführt.

Der Heizungswasserkreislauf 9, 10 hat zwei Teilkreisläufe, einen Pufferkreislauf 9, der einen Heizungswasserkreislauf zwischen einem Pufferspeicher 7 und der Biomassefeuerung 2 bildet und einen Heizkreislauf 10, der einen Heizungskreislauf zwischen dem Pufferspeicher 7 und den Raumheizflächen 8 bildet.

Sinkt die Wärmeanforderung der Heizung, bspw. aufgrund hoher Außenlufttemperaturen, unter die regelbare Leistung der Biomassefeuerung 3, wird der erzeugte Wärmeüberschuss vorerst über den Pufferkreislauf 9 in dem Pufferspeicher 7 gelagert. Von dort wird die gespeicherte Wärme, bspw. nachdem die Verbrennung in der Biomassefeuerung 3 beendet ist, den Raumheizflächen 8 zugeführt.

Raumheizflächen sind bspw. Heizkörper, Wandheizkörper (d.h. Warmwasserrohre, die in der Wand verlegt sind), Fußbodenheizungsflächen, etc.

Bei dieser bekannten Heizungsanlage 1 wird allerdings die Wärme, die unterhalb des Regelbereiches der Biomassefeuerung 3 (typischerweise unter 30% der Maximalleistung) erzeugt wird vor allem in der jahreszeitlichen Übergangszeit, in der nur ein geringer Wärmebedarf vorhanden ist, nur zu einem geringen Anteil für die Gebäudeheizung benötigt. Der überschüssige Teil muss in dem Pufferspeicher 7 gespeichert werden.

Insbesondere in dieser Übergangszeit, in der die Biomassefeuerung 3 weit unterhalb der Maximalleistung betrieben wird, sind die Betriebskosten, aufgrund des eingangs erwähnten schlechten Wirkungsgrades, im Verhältnis zur erzeugten Wärme hoch. Außerdem gibt es auch Wärmeverluste im Pufferspeicher, die ebenfalls zur erhöhten Betriebskosten führen können.

Außerdem ist auch der Raumbedarf für die Aufstellung von Brennstofflager 2, Biomassefeuerung 3 und Pufferspeicher 7 erheblich und kann einen hohen baulichen Aufwand erfordern.

Der Erfinder hat nun erkannt, dass die Möglichkeit fehlt, in den schwächeren Heiztagen innerhalb einer Heizperiode auf eine andere alternative Energiequelle mit günstigeren Betriebskosten zu wechseln.

Der Erfinder hat außerdem erkannt, dass es durch die Kombination einer Biomassefeuerung, wie ein Pelletheizkessel, mit einer Wärmepumpe möglich ist, auch in der jahreszeitlichen Übergangszeit und in Zeiten eines geringen Wärmebedarfes kostengünstig Wärme zu erzeugen.

Bei manchen Ausführungsformen der Erfindung erzeugt ein Heizungssystem bzw. Heizungsanlage, die auch als Wärmeerzeugungsanlage bezeichnet wird, Wärme sowohl aus festen biogenen Brennstoffen, in Pelletform, als auch aus der Wärmeenergie, welche in der Außenluft enthalten ist. Die erzeugte Wärme dient dabei im Allgemeinen zur Beheizung von Gebäuden oder Räumen von Gebäuden.

Die Wärme wird dabei über einen Wärmeträger, wie bspw. Luft oder Wasser oder ein anderes geeignetes Fluid, in die entsprechend zu beheizende Räume geführt. Die Wärme kann dabei bspw. unmittelbar durch erwärmte Luft in die Räume eingebracht werden, oder durch Wärmestrahlung von (Raum-)Heizflächen, die durch den Wärmeträger erwärmt werden.

Bei manchen Ausführungsformen wird die in der Außenluft enthaltene Energie (Enthalpie) mittels eines thermischen Kreisprozesses, der durch eine Wärmepumpe, bspw. eine Luft-Wasserwärmepumpe ausgeführt wird, zur Beheizung bei geringer Wärmeanforderung verwendet. Die Außenluft ist dabei bei manchen Ausführungsformen die Luft außerhalb des zu heizenden Gebäudes bzw. die Luft außerhalb des Raumes in dem die (Luft-Wasser-)Wärmepumpe angeordnet ist.

Bei manchen Ausführungsformen wird diese Energie in der Außenluft sogar auch zur Kühlung eines Gebäudes bspw. bei Sonneneinstrahlung während einer warmen Jahreszeit verwendet.

Bei geringer (Heiz-)Wärmeanforderung, bspw. in der weniger kalten Jahreszeit, kann der Kostenaufwand für die bereitzustellende Energie niedriger gehalten werden, indem Wärme aus der Außenluft entzogen und über den thermischen Kreisprozess einer Wärmepumpe zur Beheizung verwendet wird.

Manche Ausführungsformen betreffen entsprechend eine kompakte Wärmeerzeugungsanlage für den Betrieb mit erneuerbaren Energieträgern. Ein Energieträger ist dabei in Form von biogenem festen Brennstoff ein anderer in Form von Außenluft. Die Temperatur der Außenluft wird zur Nutzbarmachung des Wärmeinhaltes für Heizzwecke durch den Einsatz einer Wärmepumpe auf ein niedrigeres Temperaturniveau abgesenkt, während die Temperatur des Wärmeträgers, der zur Erwärmung des Gebäudes dient, angehoben wird. Als Medium für den Wärmetransport zum Verbraucher dient bei manchen Ausführungsformen Wasser in einem Heizungssystem bzw. Heizungswasserkreislauf.

Zur Übertragung von Wärme und Kühlung an das Gebäude kann, wie oben angedeutet, bei manchen Ausführungsformen ein Heizungswasserkreislauf mit angeschlossenen Heiz- und Kühlflächen und/oder ein Lüftungssystem eingesetzt werden.

Die vorliegende Erfindung ist demnach weder auf wasserführende Biomassefeuerungen bzw. Wärmepumpen beschränkt, noch auf Wasser als Wärmeträger.

Da die (Luft-Wasser-)Wärmepumpe bei manchen Ausführungsformen bei niedrigem Wärmebedarf Wärme bereitstellt, muss die Biomassefeuerung nicht im ungünstigen niedrigen Leistungsspektrum arbeiten. Daher kann bei manchen Ausführungsformen der Einbau eines Pufferspeichers entfallen, da die Biomassefeuerung nicht im unteren Leistungsspektrum (z.B. 30% der Maximalleistung) arbeiten muss, sondern die Wärmepumpe in diesem Fall die benötigte Wärme zur Verfügung stellt.

Die bekannte Technologie der (Luft-Wasser-)Wärmepumpe ermöglicht es bei manchen Ausführungsformen, bei einer Temperatur der zugeführten (Außen-)Luft von 3°C das Umlaufwasser in einer Heizungsanlage bzw. in einem Heizungswasserkreislauf auf die Temperatur zu erwärmen, welche für den Betrieb der Heizung bei dieser Außentemperatur erforderlich ist. Die Wärmepumpe erreicht bei vorgenannter Lufttemperatur nach technischer Angabe und Stand der Technik die (bekannte) Arbeitszahl 4.

Für die Erzeugung von Wärme mit der Luft-Wasserwärmepumpe errechnet sich die elektrische Anschlussleistung nach der folgenden Gleichung:

$$\text{Elektrische Anschlussleistung} = \text{Wärmepumpenleistung/Arbeitszahl} = 0{,}25$$

In Fig. 2 ist beispielhaft die Jahresenergiebedarfsdeckung einer Gebäudeheizung in einem Diagramm 11 veranschaulicht.

Fig. 2 zeigt im Diagramm 11 in einer Kurve 12 die Häufigkeit der Außenlufttemperaturen als Jahresdauerlinie bis zur Heizgrenze. Die Heizgrenze liegt hierbei bei Außentemperaturen von ungefähr 20°C. Auf der Ordinate des Diagramms 11 sind die Außenluft-Temperaturen und auf der Abszisse die Tage eines Jahres aufgetragen, an denen geheizt wird. Der Schnittpunkt der Kurve 12 mit der Außenluft-Temperatur bei 3°C bildet dabei bei manchen Ausführungsformen einen Gleichgewichtspunkt für die Umschaltung der Wärmeerzeugung. Die Fläche 13 über der Jahresdauerlinie bei 3°C zeigt den Wärmeenergiebedarf über 90 Tage, welcher bei manchen Ausführungsformen mit der Biomassefeuerung für biogene Brennstoffe bei Außentemperaturen von -15°C bis 3°C zu decken ist. Die Fläche 14 über der Kurve 12 zeigt den Wärmeenergiebedarf über 180 Tage, welcher mit der Luft-Wasserwärmepumpe bei Außentemperaturen über 3°C zu decken ist und beträgt bei diesem Beispiel im Mittel 50% des Jahres-Gesamtwärmebedarfes eines Gebäudes.

Bei einem Berechnungsbeispiel einer Ausführungsform beträgt die Betriebskosteneinsparung 12,5% bei Einsatz einer Luft-Wasserwärmepumpe zur Deckung des halben Gebäudewärmebedarfes im Außentemperaturbereich von 3°C bis zur Heizgrenze von 20°C für ein Gebäude mit spezifischem Wärmeverbrauch von 120 kWh/m$^2$/Jahr gegenüber den Betriebskosten bei 100% Wärmeerzeugung von 120 kWh mit biogenen Festbrennstoffen in Pelletform.

Bei dieser Berechnung ist zugrunde gelegt, dass 50% der Wärmeerzeugung, d.h. 60 kWh, mit biogenen Festbrennstoffen in Pelletform und 50% der Wärmeerzeugung, d.h. ebenfalls 60 kWh durch eine Luft-Wasserwärmepumpe mit Arbeitszahl 4 und bei einem elektrischen Energieaufwand von 15 kWh erzeugt werden. Außerdem wird ein Kostenfaktor von elektrischer Energie/Biogener Energie von 3 bei dieser Berechnung angenommen.

Dadurch, dass bei manchen Ausführungsformen die (Luft-Wasser-)Wärmepumpe eine Hälfte des Jahreswärmebedarfes deckt, wird für die andere Hälfte des Jahreswärmebedarfes nur die halbe jährliche Vorratsmenge an biogenen festen Brennstoffen benötigt. Dementsprechend kann auch ein Brennstoff-Lagerraum bei manchen Ausführungsformen entsprechend, bspw. auf das halbe Volumen, reduziert werden.

Im Sommer kann bei manchen Ausführungsformen die Luft-Wasserwärmepumpe aufgrund ihrer reversiblen Anwendungsmöglichkeit für Kühlzwecke benutzt werden. Dabei wird die in das Gebäude durch Sonneneinstrahlung eingebrachte Wärme bspw. an Wasser, das in wasserführenden Heizkörpern bzw. Heizflächen fließt, abgegeben. Das so erwärmte Wasser wird über einen Heizungswasserkreislauf dem thermodynamischen Kreisprozess der Luft-Wasserwärmepumpe für einen Wärmeentzug zugeführt. Die dabei entzogene Wärme kann bei manchen Ausführungsbeispielen sogar zur Erwärmung von Wasser, bspw. Brauchwasser, genutzt.

Dementsprechend betreffen manche Ausführungsformen ein Verfahren zum Steuern einer Wärmeerzeugungsanlage zum Heizen und/oder Kühlen eines Gebäudes. Die Wärmeerzeugungsanlage umfasst dabei eine Biomassefeuerung, die als ein Pelletheizkessel ausgestaltet ist. Die Biomassefeuerung ist für die Verbrennung biogener fester Brennstoffe, wie Pellets, und zur Erwärmung eines ersten Wärmeträgers ausgestaltet. Der erste Wärmeträger ist bei manchen Ausführungsformen bspw. Wasser und/oder Luft.

So ist bei manchen Ausführungsbeispielen die Biomassefeuerung, d.h. der Pelletheizkessel, wasserführend ausgestaltet und stellt Warmwasser bereit, das direkt für Warmwasser in einem Heizungswasserkreislauf und/oder zur Erwärmung von Wasser in einem Brauchwasserkreislauf, bspw. über einen Wärmetauscher, verwendet wird.

Bei manchen Ausführungsbeispielen ist die Biomassefeuerung (Pelletheizkessel) so ausgestaltet, dass sie Luft als Wärmeträger erwärmt. Die erwärmte Luft kann dabei zum Erwärmen eines oder mehrerer Räume in einem Gebäude bspw. über ein Lüftungssystem verwendet werden.

Bei manchen Ausführungsformen ist die Biomassefeuerung auch für die Erwärmung von Luft und Wasser als Wärmeträger ausgestaltet. Dabei dient bspw. die erwärmte Luft zum Heizen eines Raumes, bspw. des Aufstellungsortes der Biomassefeuerung, und das erwärmte Wasser wird bspw. dem Heizungswasserkreislauf zugeführt und dient zur Erwärmung Heizflächen bzw. Heizkörpern.

Außerdem umfasst, wie oben bereits ausgeführt, die Wärmeerzeugungsanlage eine Wärmepumpe, wie bspw. eine Luft-Wasserwärmepumpe, die zur Erwärmung eines Wärmeträgers dient. Der Wärmeträger kann dabei bspw. Luft und/oder Wasser sein, wie bereits im Zusammenhang mit der Biomassefeuerung ausgeführt.

Das Verfahren zum Steuern Wärmeerzeugungsanlage zum Heizen und/oder Kühlen eines Gebäudes umfasst bei manchen Ausführungsformen mehrere Schritte, die bspw. in einer Steuerung einer Wärmeerzeugungsanlage ausgeführt werden.

Zunächst wird bspw. durch eine Messeinrichtung eine Lufttemperatur ermittelt. Dies ist bei manchen Ausführungsformen die Außenlufttemperatur, d.h. bspw. die Temperatur die außerhalb des Aufstellungsortes und/oder außerhalb des zu heizende Gebäudes herrscht. Bei manchen Ausführungsformen wird auch eine (Innen-)Raumtemperatur ermittelt. Bei manchen Ausführungsformen werden auch sowohl Außen- als auch Innenraumtemperaturen ermittelt.

Ferner wird ein Umschaltpunkt ermittelt, an dem zwischen dem Betrieb der Biomassefeuerung bzw. der (Luft-Wasser-)Wärmepumpe hin und her geschaltet wird. Dieser Umschaltpunkt liegt bspw. wie oben im Zusammenhang mit Fig. 2 erläutert, bei 3 °C Außentemperatur, da bspw. bei höheren Temperaturen die Leistung einer typischen Luft-Wasserwärmepumpe ausreicht, um einen typischen Energiebedarf zu decken.

Bei manchen Ausführungsformen hängt die Lage des Umschaltpunktes von der Außentemperatur, von der Leistung der Wärmepumpe, von der Leistung der Biomassefeuerung und/oder von dem erwarteten Energiebedarf ab. Die Lage des Umschaltpunktes kann von weiteren Faktoren abhängen: z.B. Innentemperatur, Temperatur des Wärmeträgers (z.B. Wassertemperatur im Heizungswasserkreislauf), Vorund/oder Rücklauftemperatur des Heizungswassers, usw.

Bei manchen Ausführungsformen ist der Umschaltpunkt vorgegeben, während er bei anderen frei programmierbar sein kann. Außerdem kann der Umschaltpunkt bspw. als feste Größe vorgegeben sein oder kann bspw. in Abhängigkeit von wenigstens einem der oben angegeben Parametern abhängen (Außentemperatur, Leistung der Wärmepumpe, usw.).

Bei manchen Ausführungsformen wird der Umschaltpunkt auf Grundlage vorprogrammierbarer Sollwerte von Leistüngsgrenzen der Biomassefeuerung und/oder der Luft-Wasserwärmepumpe und/oder auf Grundlage der bspw. mit der Messeinrichtung erfassten Lufttemperaturen und/oder eine vorgegebenen (Innen-)Raumtemperatur bestimmt.

Die Biomassefeuerung und die Luft-Wasserwärmepumpe werden in Abhängigkeit der ermittelten Lufttemperatur und des ermittelten Umschaltpunktes gesteuert, wobei entweder die Biomassefeuerung oder die Wärmepumpe betrieben wird.

Bei manchen Ausführungsformen kann zwar grundsätzlich auch die Biomassefeuerung und die Wärmepumpe gleichzeitig betrieben werden. Die Energiespareffekt und die damit zusammenhänge Kosteneinsparung ergeben sich aber bei manchen Ausführungsformen in erster Linie durch den Betrieb des für die vorherrschende Außenlufttemperatur besser geeigneten Wärmeerzeugers. Das heißt bei niedrigeren Temperaturen wird, wie bspw. oben im Zusammenhang mit Fig. 2 beschrieben, die Biomassefeuerung betrieben und bei höheren Temperaturen die Luft-Wasserwärmepumpe.

Bei manchen Ausführungsformen wird der Umschaltpunkt auf Grundlage einer Leistungsgrenze der Biomassefeuerung und/oder der Wärmepumpe ermittelt. Wie bereits erwähnt, hängt der zu erwartende Energiebedarf bei manchen Ausführungsformen mit der Außenlufttemperatur zusammen. Aus dem Energiebedarf ergibt sich aber auch, welche Leistung ein Wärmeerzeuger erbringen muss, damit der Energiebedarf gedeckt werden kann. Dementsprechend wird der Umschaltpunkt bei manchen Ausführungsformen derart ermittelt, dass die Biomassefeuerung dann betrieben wird, wenn die Wärmepumpe nicht mehr die erforderliche Energie liefern kann und damit an ihre Leistungsgrenze stößt.

Bei der Leistungsgrenze kann bei manchen Ausführungsformen auch der Wirkungsgrad des Wärmeerzeugers, d.h. der Biomassefeuerung und/oder der Luft-Wasserwärmepumpe mit einbezogen werden. Das heißt, es wird nicht unbedingt die theoretisch mögliche Leistungsgrenze des Wärmeerzeugers verwendet, sondern es wird bspw. bei manchen Ausführungsformen ermittelt, bei welcher Leistung bspw. der andere Wärmeerzeuger einen besseren Wirkungsgrad erzielt und dann kann der Umschaltpunkt entsprechend ermittelt werden.

Wie erwähnt kann bei manchen Ausführungsformen die Wärmepumpe derart gesteuert werden, dass sie dem Wärmeträger Wärme entzieht und dadurch den Wärmeträger abkühlt.

Bei manchen Ausführungsformen, wie oben erwähnt, zirkuliert der Wärmeträger, der von der Wärmepumpe erwärmt oder abgekühlt wird, durch einen Heizungskreislauf und angeschlossene Heizkörper und/oder Heizflächen (im Folgenden wird der Begriff "Heizflächen" als Synonym für jede Art von Fläche verwendet, die geeignet ist, Wärmestrahlung abzugeben und die von einem Wärmeträger erwärmt wird). Dabei können die Heizflächen Wärme aus dem zirkulierenden Wärmeträger abgeben oder der Wärmeträger kann bspw. auch Wärme über den Heizkörper bzw. die Heizflächen aufnehmen. Durch die Abkühlung des Wärmeträgers ist es folglich möglich, die Innenraumtemperatur abzusenken und damit bspw. im Sommer eine Raumkühlung zu ermöglichen, wie oben erwähnt.

Bei manchen Ausführungsformen umfasst die Wärmeerzeugungsanlage zum Heizen eines Gebäudes einen Pelletheizkessel oder Kaminofen, der für die Verbrennung biogener fester Brennstoffe und zur Erwärmung von Heizungswasser und/oder Heizungsluft ausgebildet ist. Außerdem umfasst die Wärmeerzeugungsanlage eine Wärmepumpe, eine Messeinrichtung zur Ermittlung einer Lufttemperatur und eine Steuerung zur Steuerung der Biomassefeuerung und der Wärmepumpe.

Die Steuerung ist zum Ermitteln eines Umschaltpunktes eingerichtet. Außerdem ist sie dazu eingerichtet, wenigstens einige der oben beschriebenen Verfahrensschritte auszuführen.

Bei manchen Ausführungsformen wird der Umschaltpunkt, wie oben dargelegt, ermittelt. Bei anderen ist er bspw. vorgegeben und in einem Speicher abgelegt, auf den die Steuerung Zugriff hat. Im Allgemeinen kann der Umschaltpunkt so ermittelt werden, wie oben beschrieben.

Bei manchen Ausführungsformen weist die Wärmeerzeugungseinrichtung weiter einen Heizungskreislauf auf, in dem der Wärmeträger (bspw. Luft und/oder Wasser) zirkuliert. Der Heizungskreislauf ist dabei mit Heizflächen verbunden, sodass der Wärmeträger durch die Heizflächen fließen kann. Dabei kann der Wärmeträger die Heizflächen erwärmen, sodass die Heizflächen Wärme abstrahlen oder es kann auch der Wärmeträger Wärme über die Heizflächen aufnehmen. Die Biomassefeuerung und die Wärmepumpe sind mit dem Heizungskreislauf verbunden sind und bilden dadurch ein gemeinsames Heizsystem. Bei manchen Ausführungsformen erwärmen die Biomassefeuerung und die Wärmepumpe denselben Wärmeträger, wenn sie im Betrieb sind.

Bei manchen Ausführungsformen weist die Wärmeerzeugungsanlage bzw. die Wärmepumpe weiter einen Verdampfer, bspw. einen Kältemittelverdampfer, mit Wasser-wärmetauscher für den Wärmeentzug aus dem Heizungskreislauf auf. Die Wärmepumpe wird dabei bspw. von der Steuerung in Abhängigkeit des ermittelten Umschaltpunktes in einen Kühlbetrieb geschaltet. Dadurch ist die Wärmeerzeugungsanlage dazu ausgelegt zu kühlen. Der (Kältemittel)Verdampfer wird bei manchen Ausführungsformen wechselweise über einen gemeinsamen Vorlaufanschluss und einen gemeinsamen Rücklaufanschluss des Heizungskreislaufes betrieben.

Bei manchen Ausführungsformen weist die Wärmeerzeugungsanlage weiter einen Brauchwasserwärmetauscher auf. Im Kühlbetrieb der Wärmepumpe wird die aus dem Heizungskreislauf entzogene Wärme dem Brauchwasserwärmetauscher, bspw. über einen entsprechend Wärmeträgerkreislauf (Wasserkreislauf) zugeführt und zum Erwärmen von Brauchwasser verwendet.

Zurückkommend zu Fig. 3 ist dort eine erste Ausführungsform einer. Wärmeerzeugungsanlage 15 gezeigt.

Die Wärmeerzeugungsanlage 15 weist einen Wärmeerzeuger für biogene Festbrennstoffe auf, nämlich einen Pelletheizkessel 18 mit einer automatischen Brennstoffzuführung 17 auf. Die Brennstoffzufuhr 17 führt Pellets aus einem Pelletbehälter 16 einer Brennschale 20 des Pelletheizkessels 18 zu, die in einem Feuerraum 19 des Pelletheizkessels 18 angeordnet ist.

Der Pelletheizkessel 18 ist wasserführend ausgestaltet und ist mit einem Heizungswasserkreislauf 21 verbunden. Die durch die Verbrennung von Pellets in der Brennschale 20 entstehende Wärme wird dabei über einen Wärmetauscher dem Wasser im Heizungswasserkreislauf 21 zugeführt.

Der Heizungswasserkreislauf 21 weist einen Vorlauf 26 und einen Rücklauf 27 auf. Im Vorlauf 26 ist eine Pumpe 24 angeordnet, die das Wasser im Heizungskreislauf 21 umpumpt und dadurch zirkulieren lässt. Von der Pumpe 24 ist ein Vorlauf 28 mit Heizkörpern bzw. Heizflächen verbunden, die als Heizfläche 22 in Fig. 3 symbolisiert sind.

Die Heizfläche 22 wird durch das erwärmte und im Vorlauf 28 einströmende Heizwasser erwärmt. Dadurch kann die Heizfläche 22 die Wärme entsprechend an einen Raum abgeben, sodass dort die Luft erwärmt wird.

Von der Heizfläche 22 führt ein Rücklauf 29, in dem das abgekühlte Heizungswasser fließt, durch ein Umlenkventil 25 durch einen weiteren Rücklauf 27 in den Pelletheizkessel 18. Im Pelletheizkessel 18 wird das Wasser wieder erwärmt.

Außerdem weist die Wärmeerzeugungsanlage 15 eine Luft-Wasserwärmepumpe 32 auf, die ebenfalls mit dem Heizungswasserkreislauf 21 verbunden ist.

Die Luft-Wasserwärmepumpe 32 weist eine Maschine 33 auf, die einen thermodynamischen Kreisprozess ausführt. Dabei entzieht die Wärmepumpe der Außenluft 39 über einen Verdampfer 36 Wärme und gibt dies Wärme an einen Kondensator 34 ab. Dazu ist die Wärmepumpe über eine Leitung 40 mit dem Verdampfer 36 verbunden und mit einer Leitung 42 mit dem Kondensator 34. Außerdem ist der Verdampfer 36 über eine Leitung 41 mit dem Kondensator 34 verbunden. Darüberhinaus wird die abgekühlte Außenluft über eine Pumpe 37 und eine Abluftleitung 35 als Abluft 38 nach Außen geleitet.

Das Heizungswasser wird durch die Pumpe 24 durch die Raumheizflächen 22 geführt und über das Umlenkventil 25 und einen Rücklauf 30 in den Kondensator 34 geleitet, dort erwärmt, und durch einen Vorlauf 31 an der Stelle 23 wieder in den Vorlauf 26 des Heizungskreislaufes 21 zurückgeführt.

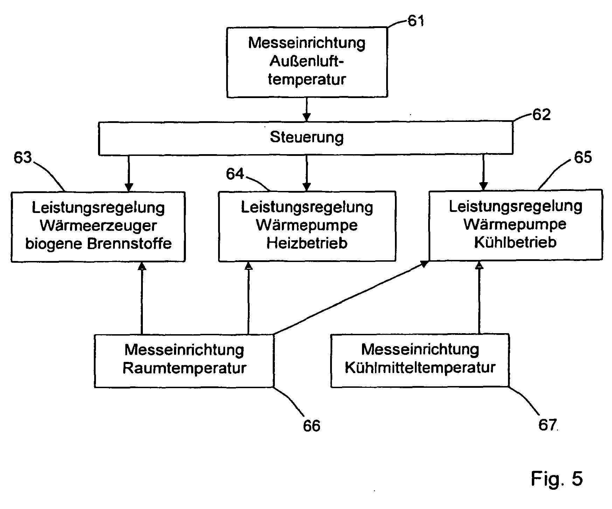

Wie oben erwähnt, kann in Abhängigkeit eines Umschaltpunktes der Pelletheizkessel 18 oder die Wärmepumpe 32 betrieben werden. Wie auch in Fig. 5 dargestellt, weist die Wärmeerzeugungsanlage 15 dazu eine Steuerung 62 auf, die den Betrieb der Wärmeerzeugungsanlage 15 steuert.

Dazu weist die Wärmeerzeugungsanlage 15 eine Messeinrichtung 61 für die Messung der Außenlufttemperatur auf. Die Messeinrichtung 61 erfasst die Außentemperatur und bspw. den zugehörigen Wärmebedarf des Gebäudes und meldet entsprechende Daten an die Steuerung 62. Außerdem kann eine Messeinrichtung 66 eine Raumtemperatur ermitteln und diese an die Steuerung 62 bzw. an eine Leistungsregelung 63, 64, 65 für den entsprechenden Wärmeerzeuger liefern.

Die Steuerung steuert entsprechend anhand des oben erklärten Umschaltpunkts, eine Leistungsregelung 63 eines Wärmeerzeugers für biogene Brennstoffe, d.h. ein Pelletheizkessel 18, bzw. eine Leistungsregelung 64 für den Heizbetrieb einer Wärmepumpe, d.h. von Wärmepumpe 32.

Die Leistungsregelung 63 regelt dann die automatische Brennstoffzuführung 17 für die Wärmeerzeugung zur Deckung des Gebäudewärmebedarfes. Ähnlich verfährt die Leistungsregelung 64 für die Wärmepumpe 32.

Die Steuerung 62 kann bspw. nach Vorgabe eines Sollwertes für die Raumtemperatur oder kann auch außentemperaturabhängig erfolgen, wie oben bereits beschrieben.

Erreichen die gemessenen Werte in der Messeinrichtung 61 bspw. die vorgegebenen Sollwerte des Umschaltpunktes zum wirtschaftlichen Betrieb der Wärmepumpe 32, so wird sie eingeschaltet und der Wärmeerzeuger für biogene feste Brennstoffe, d.h. der Pelletheizkessel 18, wird abgeschaltet.

Die Wärmeerzeugung erfolgt dann durch den Wärmeentzug aus der Außenluft 36 im Verdampfer 36 und durch Erhöhung des Temperaturniveaus durch den thermodynamischen Kreisprozess im Kondensator 34. Der Kondensator 34 ist auch als Wärmetauscher ausgeführt und dient, wie beschrieben, zur Erwärmung des Heizungswassers im Rücklauf 30. Dazu ist das Umlenkventil 25 derart geschaltet, dass der Rücklauf 29 von der Heizfläche 22 mit dem Rücklauf 30, der zum Kondensator 34 führt, verbunden ist.

Fällt bspw. die Außentemperatur unter den Sollwert des Umschaltpunktes Steuerung 61 und steigt dadurch der Wärmebedarf des Gebäudes über das wirtschaftliche Leistungsvermögen der Wärmepumpe 34, so wird für die Aufgabe der Wärmeerzeugung der Wärmeerzeuger für biogene Festbrennstoffe, d.h. der Pelletheizkessel 18 in Betrieb genommen und die Wärmepumpe 34 wird abgeschaltet. Dementsprechend wird das Umlenkventil 25 so geschaltet, dass der Rücklauf 29 mit dem Rücklauf 27, der zum Pelletheizkessel 18 führt, verbunden ist.

Bei einer Variante der oben im Zusammenhang mit Fig. 3 beschriebenen Ausführungsform ist eine Wärmepumpe 51 mit einem zusätzlichen Verdampfer 57 ausgerüstet, wie in Fig. 4 gezeigt ist. In Fig. 4 sind teilweise die gleichen Bezugszeichen wie in Fig. 3 verwendet, um gleiche Teile anzugeben. Dementsprechend gelten die obigen Ausführungen zu den gleichen Bezugszeichen auch für diese Ausführungsform.

Die in Fig. 4 veranschaulichte Wärmeerzeugungsanlage 44 weist wie die in Fig. 3 veranschaulichte Wärmeerzeugungsanlage 15 einen Wärmeerzeuger für biogene Festbrennstoffe auf, nämlich einen Pelletheizkessel 18 mit einer automatischen Brennstoffzuführung 17. Die Brennstoffzufuhr 17 führt Pellets aus einem Pelletbehälter 16 einer Brennschale 20 des Pelletheizkessels 18 zu, die in einem Feuerraum 19 des Pelletheizkessels 18 angeordnet ist.

Der Pelletheizkessel 18 ist wasserführend ausgestaltet und ist mit einem Heizungswasserkreislauf 21' verbunden, der einen Vorlauf 26 und einen Rücklauf 27 aufweist. Im Vorlauf 26 ist eine Pumpe 24 angeordnet, die das Wasser im Heizungskreislauf 21' zirkulieren lässt. Von der Pumpe 24 ist ein Vorlauf 28 mit Heizkörpern bzw. Heizflächen verbunden, die als Heizfläche 22 in Fig. 3 symbolisiert sind.

Die Heizfläche 22 wird durch das erwärmte Heizungswasser im Vorlauf 28 einströmende Wasser erwärmt und kann die Wärme entsprechend an einen Raum abgeben, sodass dort die Luft erwärmt wird.

Außerdem weist die Wärmeerzeugungsanlage 44 eine Wärmepumpe 51 auf, die, wie die Wärmepumpe 32 nach Fig. 3, einen Verdampfer 36 aufweist, der aus einströmender Außenluft 39 Wärme entnimmt, wie oben beschrieben. Zur Vereinfachung sind die Pumpe 37 und die Luftführung 35 nach außen in Fig. 4 nicht gezeigt; allerdings ist die Funktionsweise des Verdampfers 36 dieselbe wie im Zusammenhang mit Fig. 3 erläutert wurde.

Bei dieser Ausführungsform kann wenigstens ein Teil einer Kühllast eines Gebäudes im Sommer dadurch aufgenommen werde, dass die Wärmepumpe 51 mit einem zusätzlichen Verdampfer 57 mit Wärmetauscher für den Entzug von Wärme aus dem Heizungswasserkreislauf 21' versehen ist, der durch die Raumheizflächen 22 führt. Dabei nehmen die Raumheizflächen 22 nunmehr eine Funktion als Kühlflächen wahr.

Dazu ist die Umschaltung des thermodynamischen Kreisprozesses der Wärmepumpe vom Verdampfer 36 auf den Verdampfer 57 mit Wasser-Wärmetauscher vorgesehen. Aus den Kühlflächen 22 wird über den Rücklauf 29 und über ein Umlenkventil 46 das Wasser im Heizungswasserkreislauf durch einen Rücklauf 49 in den Verdampfer und Wärmetauscher 57 geführt.

Im Verdampfer und Wärmetauscher 57 wird dem Wasser aus dem Heizungswasserkreislauf 21' Wärme entzogen, wodurch das Wasser gekühlt wird. Das gekühlte Wasser wird durch die Pumpe 24 über einen Vorlauf 47 an der Stelle 23 in den Vorlauf 28 des Heizungswasserkreislaufes 21' eingeführt.

Die aus dem Wasserkreislauf entzogene Wärme wird über den von einer Maschine 55 ausgeführten thermodynamischen Kreisprozess der Wärmepumpe 51 auf ein höheres Temperaturniveau gebracht. Die Wärme wird von einem Kondensator 56 mit Wasser-Wärmetauscher über einen zweiten Wasserkreislauf mit einer Pumpe 67 und Anschlüssen 54 und 53 zu einem weiteren Wärmetauscher 52 zur Wärmeübertragung an Brauchwasser geführt. Eine Absperrung 50 trennt diesen zweiten Wasserkreislauf vom Heizungswasserkreislauf 21'.

Die Wärmepumpe 51 verfügt über eine Verbindungsleitung 59 zwischen dem Kondensator 56 und der Maschine 55. Außerdem ist der Kondensator 56 über eine Leitung 60 mit dem Verdampfer 57 verbunden. Der Verdampfer 57 ist mit einer Leitung 58 wiederum mit der Maschine 55 verbunden, wodurch sich ein geschlossener Kreislauf ergibt. Außerdem ist der Verdampfer 36 über eine Leitung 40 mit der Leitung 58 und damit mit der Maschine 55 verbunden (ähnlich zur Leitung 40 von Wärmetauscher 32 in Fig. 3). Der Verdampfer 36 ist auch über eine Leitung 41 mit der Leitung 60 verbunden (ähnlich zur Leitung 41 vom Wärmetauscher 32 in Fig. 3).

Die Wärmeerzeugungseinrichtung 44 hat folglich drei Betriebszustände, die durch die Steuerung 62 (Fig. 5) gesteuert werden.

In einem ersten Betriebszustand sind bspw. die Außentemperatur, die von der Messeinrichtung 61 ermittelt wird, und die Sollwerteingabe für die Raumtemperatur, die von einer Messeinrichtung für Raumtemperatur 66 ermittelt und an die Leistungsreglung 63 geliefert wird, derart, dass aufgrund des ermittelten Umschaltpunkts der Pelletheizkessel 18 betrieben wird.

Die Leistungsregelung 63 regelt dabei die Brennstoffzufuhr 17 derart, dass die von dem Pelleheizkessel 18 erzeugte Wärme ausreicht, um das Gebäude auf die Sollwerttemperatur zu bringen. Dazu erwärmt der Pelletheizkessel 18 das Wasser, das im Heizungskreislauf 21 durch den Vorlauf 26 und den Rücklauf 27 durch einen Wärmetauscher im Pelletheizkessel fließt. Das Wasser im Heizungskreislauf 21' wird dabei von der Pumpe 24 zirkuliert. Umlenkventile 45 und 46 im Rücklauf 27 sind derart gestellt, dass das Wasser im Heizungskreislauf nur durch den Vorlauf 28, die Heizflächen 22 und den Rücklauf 29 fließt.

Sind nun die Außentemperatur und die Sollwerteingabe in einem Bereich, dass die Wärmepumpe 51 energieeffizienter betrieben werden kann als der Pelletheizkessel 18, so schaltet die Steuerung 62 die Leistungsregelung 63 derart, dass der Pelletheizkessel 18 ausgeschaltet ist und die die Steuerung 62 steuert die Leistungsregelung 64 derart, dass die Wärmepumpe 51 in den Heizbetrieb schaltet und die Maschine 55 entsprechend einen Kreisprozess ausführt und Wärme aus der Außenluft 38 im Verdampfer 39 entzieht und auf Wasser, das durch den Kondensator 56 fließt, überträgt.

Dabei wird das Umlenkventil 45 derart geschaltet, dass Wasser aus dem Rücklauf 29 in den Rücklauf 48 gelangt und durch die offen gestellte Sperre 50 fließt. Das Wasser gelangt dann über einen Rücklauf 54 in den Kondensator 56, strömt durch diesen hindurch und fließt über eine Leitung 60 durch das Ende des Verdampfers 57 in einen Vorlauf 47 und von dort an der Stelle 23 in den Vorlauf 26, 28 des Heizungskreislaufes 21'.

Im Kondensator 56 wird Wärme aus der Außenluft 39, die im Verdampfer 36 entzogen wurde, für die Erwärmung des durchfließenden Wassers verwendet.

In einem dritten Betriebszustand sind bspw. die Außentemperatur und die Innentemperatur, die von der Messeinrichtung 66 geliefert wird, so hoch, dass nicht mehr geheizt, sondern gekühlt werden soll, d.h. die Steuerung 62 ermittelt einen Umschaltpunkt für den Kühlbetrieb.

Dabei schaltet die Steuerung 62 die Leistungsregelung 65 für den Kältebetrieb der Wärmepumpe 52 entsprechend.

Der Verdampfer 36 wird ausgeschaltet und der Verdampfer 57 in Betrieb genommen.

Außerdem wird das Umlenkventil 45 so gesperrt, dass kein Wasser mehr durch den Rücklauf 48 fließt. Zusätzlich wird auch die Sperre 50 gesperrt. Das Umlenkventil 46 hingegen wird so geschaltet, dass der Rücklauf 29 mit dem Rücklauf 49 verbunden wird, der in den Verdampfer 57 führt. Im Verdampfer 57 wird dem durchlaufenden Wasser Wärme entzogen und das gekühlte Wasser wird im Vorlauf 47 an Stelle 23 wiederum in den Vorlauf 26, 28 des Heizungswasserkreislaufes 21' geführt. Dadurch wirken die Heizflächen 22 nun als Kühlflächen.

Als weiteren Regelparameter ermittelt eine Messeinrichtung 67 die Kühlmitteltemperatur und liefert diese an die Leistungsregelung 65, damit die Leistungsregelung 65 die Kühlung mit der Wärmepumpe 51 entsprechend steuern kann. Die Steuerung 62 steuert dabei entsprechend eine Raumtemperaturvorgabe die Kühlmitteltemperatur und die Kühlleistung der Wärmepumpe 51.

Wie oben erwähnt, wird die im Verdampfer 57 entzogene Wärme über den Kondensator 56 Wasser in einem weiteren Wasserkreislauf zur Brauchwassererwärmung durch den Wärmetauscher 52 zugeführt. Dabei wird die Pumpe 67 entsprechend gesteuert.

Bei der vorliegenden Ausführungsform kam als Wärmeträger Wasser zum Einsatz. Die vorliegende Erfindung ist allerdings nicht auf Wasser als Wärmeträger begrenzt, sonder es kann jede Art von Wärmeträger zum Einsatz kommen.

Beispielsweise kommt bei manchen Ausführungsformen Luft oder ein anderes Fluid als Wärmeträger zum Einsatz. Bei manchen Ausführungsformen kommen auch Wasser und Luft als Wärmeträger zum Einsatz.

So kann bspw. bei manchen Ausführungsformen die Wärmeerzeugungsanlage Luft als Wärmeträger verwenden. Dabei ist die Biomassefeuerung (bspw. Pelletheizkessel oder Kaminofen) luftführend ausgestaltet und es wird Luft für die Heizung erwärmt. Bei manchen Ausführungsformen verwendet auch die Wärmepumpe Luft als Wärmeträger. Solche Ausführungsformen funktionieren analog zu den oben im Zusammenhang mit den Fig. 3 bis 5 beschriebenen Ausführungsformen und die obige Beschreibung ist entsprechend analog anwendbar. Die Leitungswege sind dabei ähnlich, nur dass an Stelle von Wasser Luft geführt werden muss.

Auch sind Mischformen, bei denen bspw. nur die Biomassefeuerung luftführend ausgestaltet ist und Luft als Wärmeträger verwendet und bspw. die Wärmepumpe Wasser als Wärmeträger verwendet, realisiert.

Außerdem können auch beide Wärmeträger gleichzeitig verwendet werden, d.h. die Biomassefeuerung verwendet Luft and Wasser als Wärmeträger, sowie auch die Wärmepumpe Luft und Wasser als Wärmeträger verwendet.

## Patentansprüche

1. Verfahren zum Steuern einer Wärmeerzeugungsanlage zum Heizen und/oder Kühlen eines Gebäudes, wobei die Wärmeerzeugungsanlage umfasst

   - einen Pelletheizkessel (18), der für die Verbrennung biogener fester Brennstoffe und zur Erwärmung eines ersten Wärmeträgers, insbesondere Wasser und/oder Luft, ausgebildet ist; und
   - eine Wärmepumpe (32, 51) zur Erwärmung und/oder zum Kühlen eines zweiten Wärmeträgers, insbesondere Wasser und/oder Luft, wobei das Verfahren die Schritte umfasst:
   - Ermitteln einer Lufttemperatur, wobei die ermittelte Lufttemperatur eine Außentemperatur und/oder eine Raumtemperatur umfasst;
   - Ermitteln eines Umschaltpunktes auf Grundlage einer Leistungsgrenze des Pelletheizkessels (18) und der Wärmepumpe (32, 51), wobei die Leistungsgrenze des Pelletheizkessels (18) von dem Wirkungsgrad des Pelletheizkessels (18) abhängt und/oder die Leistungsgrenze der Wärmepumpe (32, 51) von dem Wirkungsgrad der Wärmepumpe (32, 51) abhängt; und
   - Steuern des Pelletheizkessels (18) und der Wärmepumpe (32, 51) in Abhängigkeit der ermittelten Lufttemperatur und des ermittelten Umschaltpunktes, wobei entweder der Pelletheizkessel (18) oder die Wärmepumpe (32, 51) betrieben wird.

2. Verfahren nach Anspruch 1, wobei der Umschaltpunkt zusätzlich auf Grundlage eines Sollwerts für eine Raumtemperatur ermittelt wird.

3. Verfahren nach einem der vorhergehenden Ansprüche, wobei der erste Wärmeträger Wasser und/oder Luft umfasst und der Pelletheizkessel (18) ein wasserführender und/oder luftführender Pelletheizkessel ist.

4. Verfahren nach einem der vorherigen Ansprüche, wobei die Wärmepumpe (32, 51) derart gesteuert wird, dass sie dem zweiten Wärmeträger Wärme entzieht und dadurch den zweiten Wärmeträger abkühlt.

5. Verfahren nach Anspruch 4, wobei die dem zweiten Wärmeträger entzogene Wärme zum Erwärmen von Brauchwasser verwendet wird.

6. Wärmeerzeugungsanlage zum Heizen und/oder Kühlen eines Gebäudes, umfassend

   - einen Pelletheizkessel (18), der für die Verbrennung biogener fester Brennstoffe und zur Erwärmung eines ersten Wärmeträgers, insbesondere Wasser und/oder Luft, ausgebildet ist;
   - eine Wärmepumpe (32, 51) zur Erwärmung und/oder zum Kühlen eines zweiten Wärmeträgers, insbesondere Wasser und/oder Luft,
   - eine Messeinrichtung (61, 66) zur Ermittlung einer Lufttemperatur, wobei die ermittelte Lufttemperatur eine Außentemperatur und/oder eine Raumtemperatur umfasst; und
   - eine Steuerung (62) zur Steuerung des Pelletheizkessels (18) und der Wärmepumpe (32, 51), wobei die Steuerung zum Ermitteln eines Umschaltpunktes auf Grundlage einer Leistungsgrenze des Pelletheizkessels (18) und der Wärmepumpe (32, 51) eingerichtet ist, wobei die Leistungsgrenze des Pelletheizkessels (18) von dem Wirkungsgrad des Pelletheizkessels (18) abhängt und/oder die Leistungsgrenze der Wärmepumpe (32, 51) von dem Wirkungsgrad der Wärmepumpe (32, 51) abhängt, die Steuerung weiter dazu eingerichtet ist, den Pelletheizkessel (18) und die Wärmepumpe (32, 51) in Abhängigkeit der ermittelten Lufttemperatur und des ermittelten Umschaltpunktes zu steuern, und wobei die Steuerung weiter dazu eingerichtet ist, das Verfahren nach einem der Ansprüche 1 bis 5 auszuführen.

7. Wärmeerzeugungsanlage nach Anspruch 6, wobei der erste und der zweite Wärmeträger Wasser aufweisen, wobei die Wärmeerzeugungsanlage weiter einen Heizungskreislauf (21, 21') aufweist in dem das Wasser zirkuliert, wobei der Heizungskreislauf (21, 21') mit Heizflächen (22) verbunden ist, und wobei der Pelletheizkessel (18) und die Wärmepumpe (31, 52) mit dem Heizungskreislauf (21, 21') verbunden sind und dadurch ein gemeinsames Heizsystem bilden.

8. Wärmeerzeugungsanlage nach einem der Ansprüche 6 oder 7, wobei die Wärmepumpe (51) weiter einen Verdampfer (57) mit Wasserwärmetauscher für den Wärmeentzug aus dem Heizungskreislauf (21') aufweist, und wobei die Wärmepumpe (51) von der Steuerung (62) in Abhängigkeit des ermittelten Umschaltpunktes in einen Kühlbetrieb geschaltet wird.

9. Wärmeerzeugungsanlage nach Anspruch 8, weiter einen Brauchwasserwärmetauscher (52) aufweisend, wobei die im Kühlbetrieb der Wärmepumpe aus dem Heizungskreislauf (21') entzogene Wärme dem Brauchwasserwärmetauscher (52) zugeführt und zum Erwärmen von Brauchwasser verwendet wird.

**Claims**

1. Method for controlling a heat-generating plant for heating and/or cooling a building, wherein the heat-generating plant comprises

   - a pellet heating boiler (18) which is designed for burning biogenic solid fuels and for heating a first heat carrier, in particular water and/or air; and
   - a heat pump (32, 51) for heating and/or cooling a second heat carrier, in particular water and/or air, wherein the method comprises the steps:
   - determining an air temperature, wherein the determined air temperature comprises an outside temperature and/or a room temperature;
   - determining a switchover point on the basis of a power limit of the pellet heating boiler (18) and of the heat pump (32, 51), wherein the power limit of the pellet heating boiler (18) is dependent on the efficiency of the pellet heating boiler (18), and/or the power limit of the heat pump (32, 51) is dependent on the efficiency of the heat pump (32, 51); and
   - controlling the pellet heating boiler (18) and the heat pump (32, 51) in a manner dependent on the determined air temperature and the determined switchover point, wherein either the pellet heating boiler (18) or the heat pump (32, 51) is operated.

2. Method according to Claim 1, wherein the switchover point is determined additionally on the basis of a setpoint value for a room temperature.

3. Method according to one of the preceding claims, wherein the first heat carrier comprises water and/or air, and the pellet heating boiler (18) is a waterconducting and/or air-conducting pellet heating boiler.

4. Method according to one of the preceding claims, wherein the heat pump (32, 51) is controlled so as to extract heat from the second heat carrier and thereby cool the second heat carrier.

5. Method according to Claim 4, wherein the heat extracted from the second heat carrier is used for heating service water.

6. Heat-generating plant for heating and/or cooling a building, comprising

   - a pellet heating boiler (18) which is designed for burning biogenic solid fuels and for heating a first heat carrier, in particular water and/or air;
   - a heat pump (32, 51) for heating and/or cooling a second heat carrier, in particular water and/or air,
   - a measurement device (61, 66) for determining an air temperature, wherein the determined air temperature comprises an outside temperature and/or a room temperature; and
   - a controller (62) for controlling the pellet heating boiler (18) and the heat pump (32, 51), wherein the controller is designed to determine a switchover point on the basis of a power limit of the pellet heating boiler (18) and of the heat pump (32, 51), wherein the power limit of the pellet heating boiler (18) is dependent on the efficiency of the pellet heating boiler (18) and/or the power limit of the heat pump (32, 51) is dependent on the efficiency of the heat pump (32, 51), the controller is furthermore designed to control the pellet heating boiler (18) and the heat pump (32, 51) in a manner dependent on the determined air temperature and the determined switchover point, and wherein the controller is furthermore designed to carry out the method according to one of Claims 1 to 5.

7. Heat-generating plant according to Claim 6, wherein the first and the second heat carrier have water, wherein the heat-generating plant furthermore has a heating circuit (21, 21') in which the water circulates, wherein the heating circuit (21, 21') is connected to heating surfaces (22), and wherein the pellet heating boiler (18) and the heat pump (31, 52) are connected to the heating circuit (21, 21') and thereby form a common heating system.

8. Heat-generating plant according to either of Claims 6 and 7, wherein the heat pump (51) furthermore has an evaporator (57) with a water heat exchanger for the extraction of heat from the heating circuit (21'), and wherein the heat pump (51) is switched into a cooling mode by the controller (62) in a manner dependent on the determined switchover point.

9. Heat-generating plant according to Claim 8, furthermore having a service-water heat exchanger (52), wherein the heat that is extracted from the heating circuit (21') in the cooling mode of the heat pump is supplied to the service-water heat exchanger (52) and used for heating service water.

**Revendications**

1. Procédé de commande d'une installation de production de chaleur servant à chauffer et/ou à refroidir un bâtiment, l'installation de production de chaleur comprenant

   - une chaudière à pellet (18), qui est conçue pour brûler des combustibles solides biogènes et pour chauffer un premier agent caloporteur, en particulier de l'eau et/ou de l'air ; et
   - une pompe à chaleur (32, 51) servant à chauffer et/ou à refroidir un deuxième agent caloporteur, en particulier de l'eau et/ou de l'air, le procédé comprenant les étapes suivantes :
   - la détermination d'une température de l'air, la température de l'air déterminée englobant une température extérieure et/ou une température ambiante ;
   - la détermination d'un point de commutation sur la base d'une limite de puissance de la chaudière à pellet (18) et de la pompe à chaleur (32, 51), la limite de puissance de la chaudière à pellet (18) dépendant du rendement de la chaudière à pellet (18) et/ou la limite de puissance de la pompe à chaleur (32, 51) dépendant du rendement de la pompe à chaleur (32, 51) ; et
   - la commande de la chaudière à pellet (18) et de la pompe à chaleur (32, 51) en fonction de la température d'air déterminée et du point de commutation déterminé, soit la chaudière à pellet (18) soit la pompe à chaleur (32, 51) étant en fonctionnement.

2. Procédé selon la revendication 1, le point de commutation étant déterminé en plus sur la base d'une valeur théorique d'une température ambiante.

3. Procédé selon l'une quelconque des revendications précédentes, le premier agent caloporteur englobant l'eau et/ou l'air et la chaudière à pellet (18) étant une chaudière à pellet à circulation d'eau et/ou à circulation d'air.

4. Procédé selon l'une quelconque des revendications précédentes, la pompe à chaleur (32, 51) étant commandée de telle manière qu'elle extrait de la chaleur du deuxième agent caloporteur et refroidit ainsi le deuxième agent caloporteur.

5. Procédé selon la revendication 4, la chaleur extraite du deuxième agent caloporteur étant utilisée pour chauffer l'eau sanitaire.

6. Installation de production de chaleur servant à chauffer et/ou à refroidir un bâtiment, comprenant

   - une chaudière à pellet (18), qui est conçue pour brûler des combustibles solides biogènes et pour chauffer un premier agent caloporteur, en particulier de l'eau et/ou de l'air ;

- une pompe à chaleur (32, 51) servant à chauffer et/ou à refroidir un deuxième agent caloporteur, en particulier de l'eau et/ou de l'air,
- un dispositif de mesure (61, 66) servant à déterminer une température de l'air, la température de l'air déterminée englobant une température extérieure et/ou une température ambiante ; et
- une commande (62) servant à commander la chaudière à pellet (18) et la pompe à chaleur (32, 51), la commande étant conçue pour déterminer un point de commutation sur la base d'une limite de puissance de la chaudière à pellet (18) et de la pompe à chaleur (32, 51), la limite de puissance de la chaudière à pellet (18) dépendant du rendement de la chaudière à pellet (18) et/ou la limite de puissance de la pompe à chaleur (32, 51) dépendant du rendement de la pompe à chaleur (32, 51), la commande étant conçue en outre pour commander la chaudière à pellet (18) et la pompe à chaleur (32, 51) en fonction de la température d'air déterminée et du point de commutation déterminé, et la commande étant conçue en outre pour mettre en oeuvre le procédé selon l'une quelconque des revendications 1 à 5.

7. Installation de production de chaleur selon la revendication 6, le premier et le deuxième agent caloporteur englobant l'eau, l'installation de production de chaleur comprenant en outre un circuit de chauffage (21, 21') dans lequel l'eau circule, le circuit de chauffage (21, 21') étant relié à des surfaces de chauffage (22), et la chaudière à pellet (18) et la pompe à chaleur (31, 52) étant reliées au circuit de chauffage (21, 21') et formant ainsi un système de chauffage commun.

8. Installation de production de chaleur selon l'une quelconque des revendications 6 ou 7, la pompe à chaleur (51) comprenant en outre un évaporateur (57) comportant un échangeur de chaleur à eau destiné à extraire la chaleur du circuit de chauffage (21'), et la pompe à chaleur (51) étant activée en mode refroidissement par la commande (62) en fonction du point de commutation déterminé.

9. Installation de production de chaleur selon la revendication 8, comprenant en outre un échangeur de chaleur à eau sanitaire (52), la chaleur extraite du circuit de chauffage (21') lorsque la pompe à chaleur se trouve en mode refroidissement étant amenée à l'échangeur de chaleur à eau sanitaire (52) et utilisée pour chauffer l'eau sanitaire.

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20040118933 A1

- US 20090171862 A1